Europäisches Patentamt

European Patent Office

Office européen des brevets

(11) Numéro de publication: **0 206 922**
**A1**

## (12) DEMANDE DE BREVET EUROPEEN

(21) Numéro de dépôt: **86401304.0**

(22) Date de dépôt: **16.06.86**

(51) Int. Cl.4: **G21C 15/18 , F28D 7/00**

(30) Priorité: **19.06.85 FR 8509326**

(43) Date de publication de la demande:
**30.12.86 Bulletin 86/52**

(84) Etats contractants désignés:
**BE DE FR GB IT**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Tilliette, Zéphyr 71, Avenue Jean-Baptiste Clément F-92140 Clamart(FR)**

(74) Mandataire: **Mongrédien, André et al c/o. BREVATOME 25, rue de Ponthieu F-75008 Paris(FR)**

(54) Installation de refroidissement du coeur d'un réacteur nucléaire.

(57) Le refroidissement du coeur (78) lors de l'arrêt du réacteur est réalisé grâce à des échangeurs de chaleur (10) pour le refroidissement du réacteur à l'arrêt, ces échangeurs comprenant des tubes en U concentriques (12), à circulation intermédiaire de gaz, qui plongent dans un fluide caloporteur (34). Le circuit de gaz comprend en outre un turbocompresseur (86), un échangeur réfrigérant (88) et, éventuellement, un échangeur gaz-gaz, placés dans l'enceinte de confinement de l'échangeur (10). Un alternateur auxiliaire (90), directement entraîné par la turbine (82) du turbocompresseur, alimente électriquement la pompe (92) du circuit d'eau (94) de l'échangeur. Un fonctionnement autonome en cas d'arrêt du réacteur est ainsi obtenu. Cette installation peut être utilisée pour assurer le fonctionnement normal du réacteur.

FIG. 2

## Installation de refroidissement du coeur d'un réacteur nucléaire.

La présente invention concerne une installation de refroidissement du coeur d'un réacteur nucléaire à fluide caloporteur primaire incompatible avec le fluide d'utilisation de la chaleur. Cette installation est utilisée notamment lors de l'arrêt du réacteur.

Le coeur de certains réacteurs nucléaires, tels que les réacteurs à neutrons rapides est habituellement situé dans une cuve remplie de sodium liquide. Des pompes primaires font circuler ce sodium entre le coeur et des échangeurs de chaleur qui transfèrent la chaleur du circuit primaire au circuit secondaire.

Dans les réacteurs de type intégré, le circuit primaire est situé en totalité dans la cuve du réacteur.

Au contraire, dans les réacteurs du type à boucles, les échangeurs de chaleur sont placés dans des récipients annexes situés généralement à côté de la cuve contenant le coeur du réacteur.

Qu'il s'agisse de réacteurs du type intégré ou de réacteurs du type à boucles, les échangeurs de chaleur intermédiaires entre le circuit primaire et le circuit secondaire n'assurent plus en général leur fonction lors de l'arrêt des pompes primaires. En conséquence, les réacteurs nucléaires à neutrons rapides sont habituellement pourvus de boucles de refroidissement du réacteur à 1'arrêt, permettant de continuer à évacuer la puissance calorifique résiduelle dissipée par le coeur du réacteur, les pompes primaires étant stoppées et les barres absorbantes commandant l'arrêt du réacteur étant introduites dans le coeur.

Dans l'état actuel de la technique, les boucles de refroidissement du réacteur à l'arrêt comprennent des échangeurs auxiliaires sodium/sodium qui plongent dans la cuve contenant le coeur du réacteur. Dans un tel système, les boucles de sodium secondaires des échangeurs auxiliaires nécessitent le plus souvent un apport d'énergie auxiliaire pour leur mise en oeuvre.

La présente invention a justement pour objet des moyens de refroidissement à écoulement de gaz intermédiaire, qui assurent le refroidissement du coeur lors de l'arrêt des pompes primaires au moyen de boucles séparées, celles-ci pouvant alors fonctionner de façon autonome car elles produisent leurs propres besoins en électricité et même un excédent qui s'ajoute à la production de la centrale.

A cet effet, il est proposé conformément à l'invention, une installation de refroidissement du coeur d'un réacteur nucléaire à fluide caloporteur primaire incompatible avec le fluide d'utilisation de la chaleur, ledit réacteur comprenant, à l'intérieur d'une enceinte de confinement, une cuve remplie de fluide caloporteur primaire et contenant le coeur du réacteur, et au moins une pompe primaire, cette installation comprenant au moins un échangeur de chaleur pour le refroidissement du réacteur à l'arrêt, caractérisée en ce que ledit échangeur de chaleur est un échangeur de chaleur fluide caloporteur primaire/eau comprenant un faisceau de tubes en U concentriques délimitant des espaces annulaires inter-tubes dans lesquels circule un gaz chimiquement neutre, le faisceau de tubes plongeant dans le fluide caloporteur primaire et formant deux branches entourées chacune par une virole munie d'une fenêtre d'entrée du fluide caloporteur primaire chaud sortant du coeur du réac teur, cette fenêtre d'entrée étant placée à un niveau inférieur au niveau minimal du fluide caloporteur primaire à l'arrêt de la pompe primaire pour assurer dans ces conditions une circulation du fluide caloporteur primaire par convection naturelle à l'intérieur desdites viroles, ladite installation comprenant de plus :

-un circuit secondaire d'eau comportant au moins une pompe secondaire et sur lequel sont raccordés des tubes intérieurs du faisceau de tubes en U concentriques,

-un circuit de gaz fermé sur lequel sont raccordés lesdits espaces annulaires inter-tubes, ce circuit de gaz comprenant au moins une turbine et un compresseur accouplés sur le même arbre et formant un turbocompresseur et un échangeur réfrigérant placé dans le circuit de gaz entre la turbine et le compresseur.

Selon les applications, un échangeur récupérateur gaz basse pression-gaz haute pression peut être ajouté au circuit afin d'en améliorer l'efficacité.

L'autonomie des boucles de refroidissement du réacteur ainsi défini est obtenue grâce aux caractéristiques du gaz (de préférence de l'hélium) à la sortie de l'échangeur de chaleur sodium/eau - (pression de 2 à 4 MPa et température d'environ 500°C). Les calculs ont montré que ces caractéristiques sont largement suffisantes pour assurer le fonctionnement du système dans la mesure où l'échangeur réfrigérant dispose d'une source froide permettant d'abaisser suffisamment la température de l'hélium (jusque vers 50°C ou 60°C). La turbine fournit alors une puissance qui suffit à entraîner le compresseur, celui-ci assurant une élévation de la pression du gaz prenant notamment en compte la perte de charge à l'intérieur de l'échan geur de chaleur sodium/eau. Le cycle à gaz ainsi réalisé assure donc l'autonomie de puissance mécanique recherchée pour la circulation du fluide d'utilisation.

L'échangeur de chaleur sodium/eau à circulation intermédiaire de gaz est de préférence intégré dans la cuve du réacteur. Le cycle à gaz fonctionne alors dès qu'il existe un dégagement de chaleur, même faible, dans le coeur.

Conformément à un mode de réalisation préféré de l'invention, les moyens de refroidissement com prennent de plus un alternateur auxiliaire directement entraîné par la turbine et alimentant électriquement la pompe du circuit secondaire d'eau. Cette caractéristique permet d'assurer de façon autonome la circulation des quantités d'eau indispensables au refroidissement du sodium primaire et du gaz.

Dans ce mode de réalisation préféré de l'invention, le turbocompresseur et l'échangeur réfrigérant sont implantés à proximité de l'échangeur de chaleur sodium/eau, à l'intérieur de l'enceinte de confinement. Cette configuration permet de diminuer le coût des installations correspondantes et de maintenir leur efficacité à un bon niveau. De plus, son circuit étant peu développé, le volume de gaz intermédiaire sous pression concerné en cas de fuite éventuelle significative vers le sodium primaire reste faible.

De préférence, une source d'alimentation électrique de secours est prévue pour démarrer et pour alimenter l'alternateur auxiliaire qui fonctionne alors en moteur pour lancer le turbocompresseur dans le cas où celui-ci est à l'arrêt.

Lorsque l'échangeur sodium/hélium/eau fonctionne en permanence, on peut utiliser une partie de la chaleur récupérée sur l'échangeur réfrigérant du cycle à gaz pour améliorer le bilan thermodynamique de la centrale. A cet effet, l'échangeur réfrigérant peut être refroidi par un deuxième circuit d'eau.

Enfin, il est à noter que l'échangeur de chaleur sodium/hélium/eau peut être soit un échangeur auxiliaire logé dans la cuve contenant le coeur du réacteur, et cela indépendamment des échangeurs de chaleur intermédiaires principaux du réacteur, soit un échangeur principal du réacteur.

On décrira maintenant, à titre d'exemple non limitatif, différentes variantes de réalisation de l'invention en se référant aux dessins annexés dans lesquels :

-la figure 1 est une vue de face, en coupe longitudinale schématique, d'un échangeur de chaleur sodium/eau à circulation intermédiaire de gaz pouvant être utilisé avantageusement pour assurer soit le refroidissement à l'arrêt, soit le fonctionnement normal d'un réacteur nucléaire réalisé conformément à l'invention,

-la figure 2 est une vue en coupe schématique représentant à plus petite échelle l'échangeur de la figure 1 implanté dans la cuve d'un réacteur nucléaire de type intégré, ainsi que le circuit de gaz associé à cet échangeur conformément à l'invention,

-la figure 3 est une vue schématique, partiellement en coupe, montrant l'implantation de l'échangeur de la figure 1 à l'intérieur de l'enceinte de confinement, ainsi que les circuits d'eau et de gaz associés à cet échangeur.

Conformément à l'invention, le refroidissement à l'arrêt d'un réacteur nucléaire est réalisé au moyen d'un échangeur de chaleur sodium/eau à circulation intermédiaire d'un gaz neutre constitué de préférence par de l'hélium.

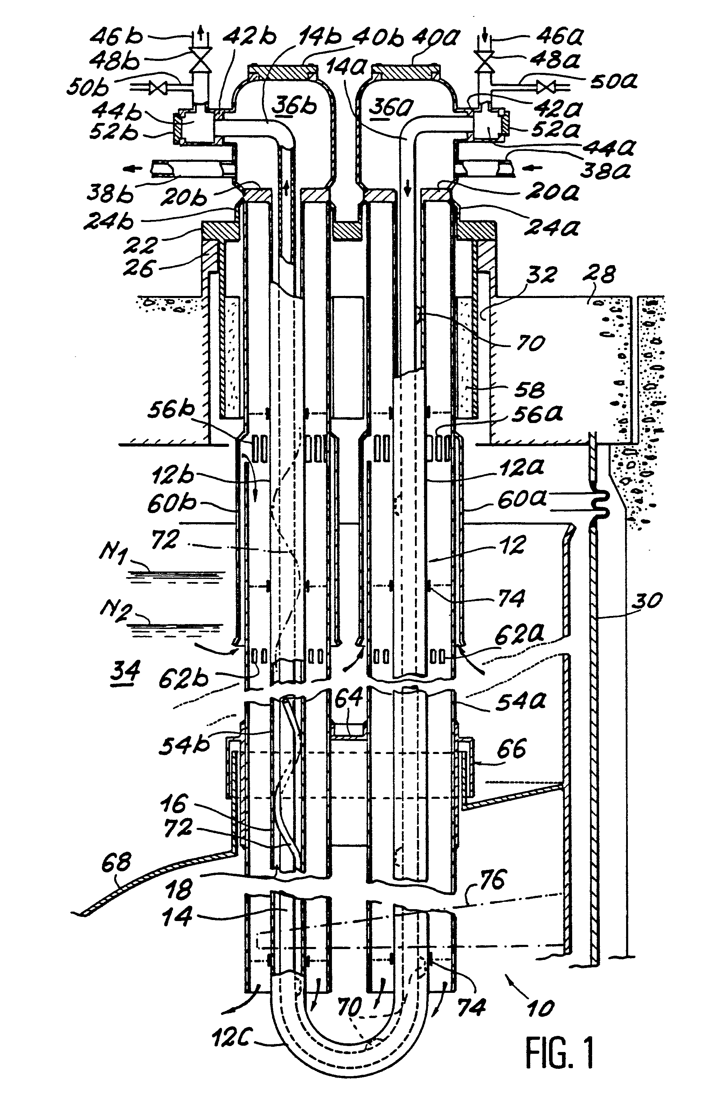

On décrira tout d'abord à titre d'exemple préférentiel en se référant à la figure 1, un échangeur sodium/hélium/eau à doubles tubes en U. Les caractéristiques mécaniques et thermiques d'un tel échangeur sont particulièrement bonnes et justifient l'utilisation préférentielle de cet appareil dans un réacteur selon l'invention. Cependant, un échangeur de chaleur sodium/eau à circulation intermédiaire de gaz d'un autre type et notamment à tubes droits ou à tubes à baïonnette peut aussi être utilisé sans sortir du cadre de l'invention.

L'échangeur de chaleur 10 représenté sur la figure 1 comprend un faisceau de doubles tubes en U 12, un seul de ces doubles tubes étant représenté à plus grande échelle. Chacun des doubles tubes en U 12 comprend un tube intérieur 14 l'intérieur duquel circule un fluide réfrigérant tel que l'eau-vapeur dans le cas d'un générateur de vapeur, et un tube extérieur 16 délimitant avec le tube intérieur 14 un espace annulaire 18 dans lequel circule un gaz chimiquement neutre tel que de l'hélium.

Chacun des doubles tubes 12 du faisceau com prend, selon le sens du fluide chauffé, une branche verticale descendante 12a, une branche verticale ascendante 12b et une partie cintrée inférieure 12c joignant les branches verticales.

Les extrémités supérieures des branches descendante et ascendante des tubes extérieurs 16 sont fixées de façon étanche sur deux plaques à tubes horizontales 20a et 20b, dites plaques à tubes gaz/sodium, situées côte-à-côte et au même niveau. Ces plaques à tubes 20a et 20b reposent sur une plaque horizontale de supportage 22, respectivement par l'intermédiaire de deux jupes 24a et 24b. La plaque de supportage 22 repose elle-même, par l'intermédiaire d'une pièce 26, sur une dalle de fermeture 28 d'une cuve 30, dans laquelle plongent les doubles tubes 12. De façon plus précise, la pièce 26 est solidaire de la dalle 28 et délimite une ouverture 32 formée dans celle-ci et par laquelle les doubles tubes 12 de l'échangeur plongent dans le sodium liquide 34 contenu dans la cuve 30.

Les plaques à tubes 20a et 20b constituent les parois inférieures d'une chambre d'entrée de gaz 36a et d'une chambre de sortie de gaz 36b respectivement. Une tubulure d'entrée de gaz 38a et une tubulure de sortie de gaz 38b débouchent respectivement dans les chambres 36a et 36b. A leur extrémité supérieure, chacune des chambres 36a et 36b est obturée par un couvercle amovible 40a et 40b respectivement. Le démontage de ces couvercles permet d'inspecter les plaques à tubes 20a et 20b.

Les extrémités supérieures des branches descendante et ascendante des tubes intérieurs 14 traversent librement les plaques à tubes 20a et 20b et sont repliées à 90° à l'intérieur des chambres 36a et 36b, pour se terminer par des parties sensiblement horizontales 14a et 14b. Les extrémités de ces parties horizontales 14a et 14b des tubes intérieurs 14 sont fixées de façon étanche sur des plaques à tubes verticales 42a et 42b, dites plaques à tubes eau/gaz, constituant une partie de la paroi latérale des chambres 36a et 36b respectivement.

Derrière les plaques à tubes 42a et 42b, les tubes intérieurs 14 débouchent respectivement dans une chambre d'entrée d'eau 44a et dans une chambre de sortie d'eau ou de vapeur 44b. Une tubulure d'entrée d'eau 46a équipée d'une vanne 48a débouche dans la chambre 44a. De façon comparable, une tubulure de sortie d'eau ou de vapeur 46b équipée d'une vanne 48b débouche dans la chambre de sortie d'eau ou de vapeur 44b.

Des tuyauteries 50a et 50b sont raccordées sur les tubulures 46a et 46b, entre les vannes 48a et 48b et les chambres 44a et 44b respectivement. Ces tuyauteries 50a et 50b servent à raccorder l'échangeur de chaleur à un circuit permettant d'injecter un gaz sous pression servant à chasser le fluide chauffé, l'eau ou la vapeur à titre d'exemple, et de vidanger ainsi les tubes intérieurs 14.

Chacune des chambres 44a et 44b est obturée par un couvercle amovible 52a et 52b respectivement, placé en vis-à-vis de la plaque à tubes 42a, 42b correspondante.

La circulation du sodium liquide 34 autour des branches descendantes 12a et des branches ascendantes 12b du faisceau de double tubes 12 est descendante dans ces deux branches ; elle est canalisée au moyen de deux viroles 54a et 54b fixées respectivement aux plaques à tubes 20a et 20b et entourant respectivement chacune des branches verticales du faisceau.

A un niveau supérieur au niveau normal $N_1$ de sodium liquide 34 dans la cuve 30, chacune des viroles 54a et 54b comprend des fenêtres d'entrée principales 56a et 56b. Ces fenêtres sont surélevées par rapport au niveau de sodium, afin que l'échange thermique entre le sodium liquide circulant autour du faisceau de doubles tubes 12 et l'eau vapeur circulant dans les tubes internes 14 s'effectue sur une surface aussi grande que possible. Dans l'exemple représenté sur la figure, les fenêtres 56a et 56b sont placées juste en-dessous d'une pièce d'adaptation 58 entourant les viroles 54a et 54b au niveau de la dalle 28, cette pièce 58 étant suspendue à la plaque de supportage 22.

La montée du sodium liquide 34 jusqu'aux fenêtres d'entrée principales 56a et 56b est obtenue en créant autour de chacune des viroles 54a et 54b un effet de siphon, au moyen de deux cloches 60a et 60b respectivement fixées aux viroles 54a et 54b juste au-dessus des fenêtres 56a et 56b. Les cloches 60a et 60b plongent dans le sodium liquide 34 jusqu'à un niveau inférieur au niveau minimal $N_2$ du sodium dans la cuve.

Approximativement au même niveau que l'extrémité inférieure des cloches 60a et 60b, chacune des viroles 54a et 54b comprend de plus des fenêtres d'entrée auxiliaires calibrées 62a et 62b autorisant une circulation descendante de sodium à l'intérieur des viroles par convection naturelle en cas d'arrêt des pompes de circulation. Ces fenêtres permettent d'assurer la fonction de refroidissement à l'arrêt conformément à l'invention.

Les viroles 54a et 54b sont ouvertes à leurs extrémités inférieures, qui sont situées au niveau de la jonction des branches verticales 12a et 12b des doubles tubes avec la partie inférieure cintrée 12c.

Dans leur partie centrale, c'est-à-dire bien endessous des fenêtres 62a et 62b, les viroles 54a et 54b sont fixées de façon étanche sur une pièce de transition 64. La périphérie de cette pièce 64 coopère par un système d'étanchéité 66 à cloche de gaz avec un redan 68 séparant à l'intérieur de la cuve 30 le sodium chaud admis dans l'échangeur 10 par les fenêtres d'entrée 56a et 56b du sodium "froid" sortant par l'extrémité inférieure des viroles 54a et 54b.

Les tubes extérieurs 16 sont lisses et se dilatent librement dans le sens vertical à partir des plaques à tubes 20a et 20b.

Les branches descendantes et les parties inférieures cintrées des tubes intérieurs 14 sont également lisses, et ne comportent que des ergots de centrage espacés 70 qui permettent un maintien correct des tubes intérieurs dans les tubes extérieurs. Dans la branche ascendante du faisceau, les tubes intérieurs 14 peuvent également être lisses et munis d'ergots de centrage sur leurs faces externes. Toutefois, dans le cas du fonctionnement en générateur de vapeur, ils comportent de préférence sur leurs faces externes des ailettes longitudinales ou hélicoïdales 72 assurant simultanément le centrage des tubes intérieurs dans les tubes extérieurs, un échange thermique plus efficace et une meilleure répartition de la phase d'ébullition entre les deux branches.

A l'intérieur des viroles 54a et 54b, le positionnement des doubles tubes 12 du faisceau est assuré par des grilles horizontales 74. Il est à noter que les grilles 74 situées à la partie inférieure des viroles 54a et 54b assurent un guidage latéral des tubes 12, tout en autorisant une certaine souplesse transversale des tubes, c'est-à-dire une déformation de ceux-ci dans le plan passant par les axes des branches descendantes 12a et montantes 12b des tubes 12. Cette configuration permet de prendre en compte les possibles différences de dilatation transversale entre les branches des tubes à la partie inférieure de l'échangeur. Les dilatations différentielles verticales des tubes intérieurs 14 sont absorbées par les tronçons horixontaux supérieurs de ces tubes situés dans les chambres supérieures 36a et 36b.

De préférence, un ou plusieurs dispositifs 76 sont prévus à l'intérieur de la cuve 30 pour assurer le guidage des viroles 54a et 54b, c'est-à-dire empêcher leur déplacement horizontal, tout en permettant la dilatation verticale de ces viroles par rapport à la cuve.

L'échangeur de chaleur 10 qui vient d'être décrit en se référant à la figure 1 peut fonctionner soit de façon intermittente, lorsque le réacteur est à l'arrêt, soit de façon permanente.

Lorsqu'il ne fonctionne que pour assurer le refroidissement du réacteur à l'arrêt, seules les fenêtres auxiliaires 62a et 62b sont utilisées pour assurer la circulation du sodium à l'intérieur des viroles 54a et 54b. Dans ce cas, l'échangeur de chaleur 10 peut donc être simplifié par la suppression des fenêtres 56a et 56b et des cloches 60a et 60b. Le refroidissement principal du sodium est alors assuré par une circulation d'eau sous pression (5 MPa par exemple), qui peut être réchauffée ou transformée en vapeur à l'intérieur des tubes 14.

Lorsque l'échangeur de chaleur 10 représenté sur la figure 1 fonctionne en permanence, il constitue un générateur de vapeur principal du réacteur.

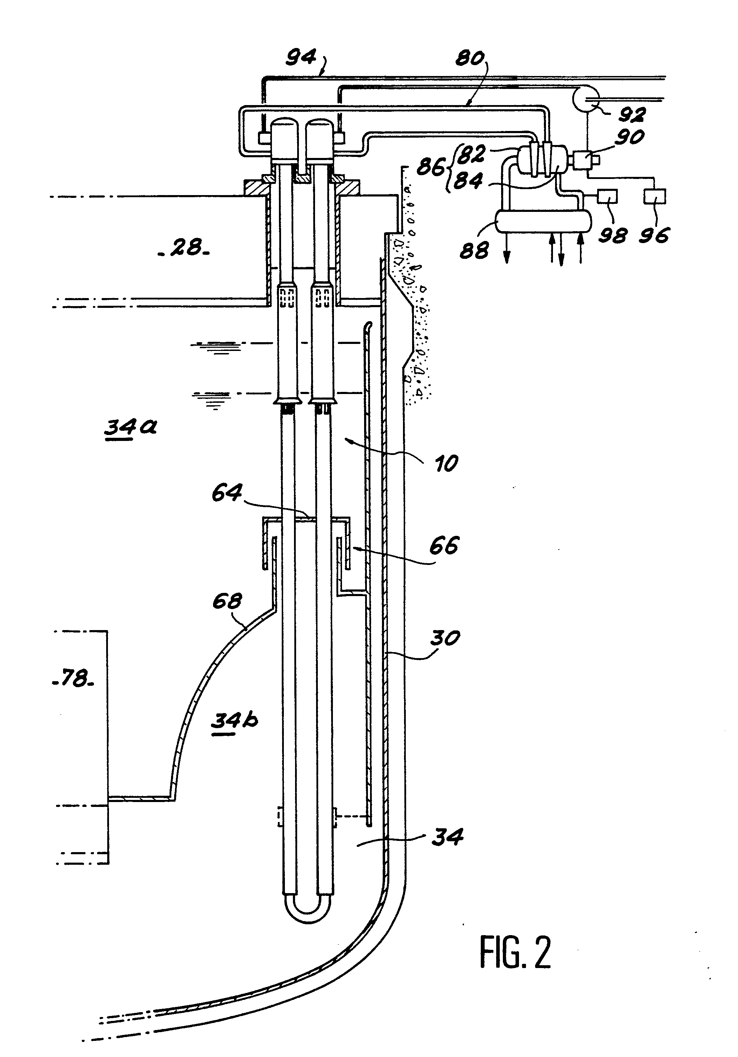

La figure 2 illustre l'implantation de l'échangeur de chaleur 10 de la figure 1 dans la cuve principale 30 d'un réacteur nucléaire. De façon plus précise, la figure 2 concerne l'implantation de l'échangeur 10 dans un réacteur qui peut être indifféremment, soit du type intégré comme sur cette figure 2, soit du type à boucles.

La cuve 30 contient de façon connue le coeur 78 du réacteur, celui-ci étant noyé dans le sodium liquide 34. Un redan 68 sépare l'intérieur de la cuve 30 en un collecteur chaud 34a situé principalement au-dessus du coeur 78 et un collecteur "froid" 34b disposé autour de ce dernier.

L'échangeur de chaleur 10 est suspendu à la dalle 28 obturant la cuve 30 à son extrémité supérieure. L'étanchéité entre le collecteur chaud 34a et le collecteur froid 34b au niveau de l'échangeur 10 est réalisée au moyen d'un système d'étanchéité à cloche de gaz 66 interposé entre la pièce de transition 64 solidaire des viroles de l'échangeur et le redan 68.

La figure 2 illustre de plus le circuit de gaz 80 qui est associé l'échangeur de chaleur 10 conformément à l'invention.

Ce circuit de gaz 80 a pour caractéristiques essentielles d'être particulièrement compact et simple et de pouvoir fonctionner de façon autonome. Il comprend une turbine 82 et un compresseur 84 accouplés sur le même arbre et formant un turbocompresseur compact 86. L'hélium à environ 500°C sortant de l'échangeur 10 par la tubulure 38b est injecté dans la turbine 82. Pour que le systéme fonctionne, il est nécessaire d'abaisser la température du gaz à l'entrée du compresseur 84 jusque vers 50 ou 60°C. A cet effet, le circuit de gaz comprend en plus de la turbine 82 et du compresseur 84, un échangeur réfrigérant 88 et, éventuellement, un échangeur-récupérateur gaz-gaz.

Dans le circuit 80 ainsi constitué, la turbine 82 fournit une puissance qui suffit à entraîner le compresseur 84. Ce dernier assure toute la circulation du gaz et l'élévation de pression du cycle, y compris la compensation de la perte de charge assez élevée qui se produit à la fois dans l'échangeur 10 et dans les tuyauteries du circuit 80, dont le diamètre est relativement faible, compte tenu du débit modéré de gaz.

Etant donné qu'un excédent de puissance est disponible sur l'arbre du turbocompresseur 86, on monte également sur celui-ci un petit alternateur auxiliaire 90, directement entraîné par la turbine 82. Le courant électrique délivré par l'alternateur 90 est utilisé en priorité pour entraîner la ou les pompes 92 assurant la circulation de l'eau dans le circuit d'eau 94 de l'échangeur 10 et pourrait être utilisé pour d'autres besoins propres de la centrale.

Le cycle à gaz ainsi réalisé par le circuit 80 assure l'autonomie de puissance mécanique recher chée. Dans le cas d'un échangeur intégré dans la cuve 30 du réacteur comme on l'a représenté sur la figure 2, le système fonctionne dès qu'il existe un dégagement de chaleur, même faible, dans le coeur 78. La circulation de l'hélium et l'échange thermique qui lui correspond sont automatiquement assurés. De l'électricité est en outre disponible pour entraîner les pompes à eau, dont le débit s'adapte à la puissance thermique à évacuer. Par ailleurs, le turbocompresseur 86 peut fonctionner dans une gamme de pression très étendue. En faisant varier la pression, on peut donc faire évoluer la puissance du turbocompresseur dans de grandes proportions.

Le turbocompresseur étant à l'arrêt, la mise en route du circuit se fait en alimentant l'alternateur 90 au moyen d'une source électrique de secours - (batterie 96). Au démarrage, l'alternateur fonctionne alors en moteur pendant quelques instants, selon une technique bien connue.

L'utilisation d'un turbocompresseur 86 et d'un circuit de gaz associé propre à chaque module d'échange permet de diviser au maximum le circuit d'hélium en un grand nombre de parties indépendantes, ce qui limite le volume de gaz concerné en cas de fuite de gaz.

Le circuit de gaz 80 est complété par un dispositif de contrôle 98 permettant de détecter une fuite éventuelle dans les doubles tubes en U de l'échangeur 10.

Grâce au caractère compact du turbocompresseur 86, de l'échangeur réfrigérant 88 et, le cas échéant, de l'échangeur-récupérateur gaz-gaz, ces composants et, par conséquent, l'ensemble du circuit 80, peuvent être implantés à proximité des parties supérieures de l'échangeur de chaleur 10, à l'intérieur même du bâtiment réacteur. La longueur des tuyauteries du circuit de gaz 80 et la quantité de gaz concerné en cas de fuite se trouvent ainsi encore réduites.

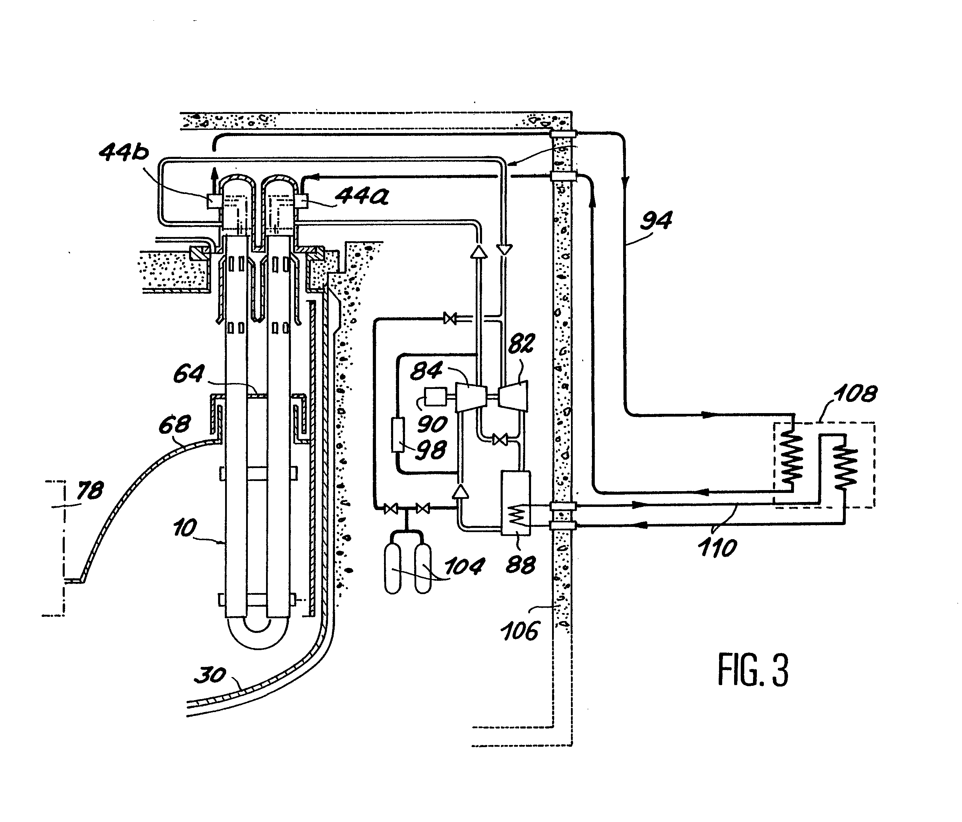

Sur la figure 3, on a représenté les composants et les circuits qui assurent le refroidissement du réacteur à l'arrêt.

Sur cette figure, on reconnaît l'échangeur de chaleur 10, placé dans une cuve 30 contenant le coeur 78 du réacteur de la manière qui vient d'être décrite en référence à la figure 2. Ce générateur de vapeur 10 est un générateur à doubles tubes en U, comme on l'a décrit précédemment en se référant à la figure 1. Il assure l'échange thermique entre le sodium du circuit primaire et l'eau du circuit secondaire d'eau 94, au travers d'une circulation intermédiaire d'un gaz neutre tel que de l'hélium.

Le circuit de gaz 80 a été décrit précédemment en se référant à la figure 2. On reconnaît notamment la turbine 82, le compresseur 84, l'échangeur réfrigérant 88 et l'alternateur 90. On reconnaît aussi le dispositif de traitement de l'hélium 98. Une réserve d'hélium 104, normalement isolée par un système de vannes du reste du circuit 80, permet le cas échéant d'injecter une quantité supplémentaire d'hélium dans ce circuit.

On voit parfaitement sur la figure 3 que ce circuit intermédiaire de gaz 80 est placé en totalité à l'intérieur de l'enceinte de confinement en béton 106 du réacteur.

Sur la figure 3 est également représenté le circuit secondaire d'eau 94. Ce circuit assure le transfert de la chaleur depuis l'échangeur 10 jusqu'à une source froide 108 telle qu'un aéroréfrigérant.

Par ailleurs, le refroidissement de l'hélium sortant de la turbine 82 est assuré dans l'échangeur réfrigérant 88 par un circuit d'eau 110 également pourvu d'une source froide telle que l'aéroréfrigérant 108.

Des réservoirs ou des circuits adéquats doivent en outre être prévus sur le circuit 110 assurant le refroidissement de l'échangeur réfrigérant 88, afin d'assurer le fonctionnement de la boucle même en cas d'arrêt du réacteur.

Bien que la description qui vient d'être faite concerne un réacteur intégré, l'invention peut s'appliquer également à un réacteur à boucles. Cependant, la circulation du fluide primaire devra alors être assurée par des moyens appropriés, ces moyens pouvant notamment utiliser l'électricité fournie par l'alternateur 90 entraîné par le turbocompresseur à gaz 86.

**Revendications**

1. Installation de refroidissement du coeur d'un réacteur nucléaire à fluide caloporteur primaire incompatible avec le fluide d'utilisation de la chaleur, ledit réacteur comprenant, à l'intérieur d'une enceinte de confinement (106), une cuve (30) remplie de fluide caloporteur primaire (34) et contenant le coeur (78) du réacteur, et au moins une pompe primaire, cette installation comprenant au moins un échangeur de chaleur (10) pour le refroidissement du réacteur à l'arrêt, caractérisée en ce que ledit échangeur de chaleur (10) est un échangeur de chaleur fluide caloporteur primaire/eau comprenant un faisceau de tubes en U concentriques (12) délimitant des espaces annulaires inter-tubes dans lesquels circule un gaz chimiquement neutre, le faisceau de tubes (12) plongeant dans le fluide caloporteur primaire (34) et formant deux branches (12a, 12b) entourées chacune par une virole (54a, 54b) munie d'une fenêtre d'entrée (62a, 62b) du fluide caloporteur primaire (34) chaud sortant du coeur (78) du réacteur, cette fenêtre d'entrée étant placée à un niveau inférieur au niveau minimal - ($N_2$) du fluide caloporteur primaire (34) à l'arrêt de la pompe primaire pour assurer dans ces conditions une circulation du fluide caloporteur primaire par convection naturelle à l'intérieur desdites viroles, ladite installation comprenant de plus :

-un circuit secondaire d'eau (94) comportant au moins une pompe secondaire (92) et sur lequel sont raccordés des tubes intérieurs (14) du faisceau de tubes en U concentriques (12),

-un circuit de gaz fermé (80) sur lequel sont raccordés lesdits espaces annulaires inter-tubes, ce circuit de gaz comprenant au moins une turbine - (82) et un compresseur (84) accouplés sur le même arbre et format un turbocompresseur (86) et un échangeur réfrigérant (88) placé dans le circuit de gaz entre la turbine et le compresseur.

2. Installation de refroidissement selon la revendication 1, caractérisée en ce qu'elle comprend de plus un alternateur auxiliaire (90) directement entraîné par la turbine (82) et alimentant électriquement ladite pompe secondaire (92).

3. Installation de refroidissement selon la revendication 2, caractérisée en ce qu'elle comprend de plus une source d'alimentation électrique de secours (96) permettant de démarrer et d'alimenter l'alternateur auxiliaire (90), qui fonctionne alors en moteur, en cas d'arrêt du turbocompresseur (86).

4. Installation de refroidissement selon l'une quelconque des revendications 1 à 3, caractérisée en ce que le turbocompresseur (86) et l'échangeur réfrigérant (88) sont implantés à proximité de l'échangeur de chaleur fluide caloporteur primaire/eau (10), à l'intérieur de l'enceinte de confinement (106).

5. Installation de refroidissement selon l'une quelconque des revendications 1 et 4, caractérisée en ce que l'échangeur réfrigérant (88) est refroidi par un deuxième circuit d'eau (110).

6. Installation de refroidissement selon l'une quelconque des revendications 1 à 5, caractérisée en ce que l'échangeur de chaleur fluide caloporteur/eau (10) a une fonction de générateur de vapeur principal.

FIG. 1

FIG. 2

FIG. 3

0 206 922

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 538 154  (WESTINGHOUSE) <br> * Page 1, lignes 8-16; page 4, lignes 19-35; figure unique * | 1 | G 21 C  15/18 <br> F 28 D   7/00 |
| | --- | | |
| Y | FR-E-   71 105  (STEIN & ROUBAIX) <br> * Page 1; figure unique * | 1 | |
| | --- | | |
| Y | US-A-4 312 184  (J. MANGUS) <br> *  Colonne  1,  lignes  19-28; colonne 2, lignes 12-33;  colonne 3, lignes 7-25; colonne 4, lignes 13-18;  colonne  4,  ligne  44 - colonne  5,  ligne  30;  figures 1,7,8 * | 1 | |
| A | | 2,3,5,6 | **DOMAINES TECHNIQUES RECHERCHES (Int. Cl.4)** |
| | --- | | G 21 C  15/00 <br> G 21 C   1/00 <br> F 28 D   7/00 <br> F 22 B   1/00 |
| A | US-A-3 438 430  (LUCIEN KESTEMONT) <br> *  Colonne  1,  lignes  22-36; revendication 1; figures 1,2 * | 1 | |
| | --- | | |
| A | FR-A-2 246 028  (EDF) <br> *  Revendications  1,3,7;  figure unique * | 1,2,4 | |
| | --- | | |
| A | FR-A-2 295 536  (EDF) <br> * Page 1 * | 1 | |
| | ----- | | |

Le présent rapport de recherche a été établi pour toutes les revendications

| Lieu de la recherche <br> LA HAYE | Date d'achèvement de la recherche <br> 13-08-1986 | Examinateur <br> JANDL F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82